# EUROPEAN PATENT APPLICATION

(11) **EP 4 561 058 A1**
(43) Date of publication of application: **28.05.2025**
(21) Application number: 23842606.8
(22) Date of filing: 15.02.2023
(51) Int. Cl.: H04N 17/04, G09G 5/12

(54) **VIDEO DISPLAY CONTROL DEVICE, CONTROL METHOD THEREFOR, AND PROGRAM**

(30) Priority: 22.07.2022 JP 2022117507
(71) Applicant: Sony Interactive Entertainment Inc., Tokyo 108-0075 (JP)
(72) Inventor: MATSUMURA, Michiko, Tokyo 108-0075 (JP); AOKI, Sachiyo, Tokyo 108-0075 (JP); IKEDA, Takakazu, Tokyo 108-0075 (JP); HATASAWA, Yasunari, Tokyo 108-0075 (JP); AIZAWA, Takahiro, Tokyo 108-0075 (JP); OGISO, Toru, Tokyo 108-0075 (JP); MORISHITA, Kaoru, Tokyo 108-0075 (JP)
(74) Representative: D Young & Co LLP
(86) International application number: PCT/JP2023/005202
(87) International publication number: WO 2024/018668

(57) **Abstract**

Provided is a video display control device that extracts one or more candidates for a video output setting with which a connected display device is able to perform display, and outputs a video signal based on the video output setting of the candidates to verify whether or not the display device is able to perform display, for each of the one or more candidates.

## Description

### [Technical Field]

The present invention relates to a video display control device for displaying a video on a display device, a control method therefor, and a control program therefor.

### [Background Art]

Generally, a display device that displays video supports a plurality of types of video output settings (screen resolution, scanning method, etc.) as specifications for a video signal to be supplied from a video display control device such as a home video game console, and the types of supported video output settings vary depending on the model of the display device. In order to display a video on a connected display device, the video display control device needs to output a video signal that conforms to the video output settings supported by the display device.

### [Summary]

### [Technical Problem]

Normally, the video signal specifications are determined by the video output setting according to the setting, and if both the video display control device and the display device support the same video output setting, it should be possible to display the video of the video signal. However, depending on the video signal standard, detailed specifications such as the synchronization signal included in the video signal are not defined in a rigorous manner, and implementation may differ depending on the manufacturer, or there may be a deviation in the allowable range of specifications. In such cases, even if the video display control device outputs a video signal that conforms to the video output setting supported by the display device, the display device may not be able to display the video of the video signal properly.

The present invention has been made in consideration of the above-mentioned circumstances, and one of its objects is to provide a video display control device, a control method therefor, and a program that can output a video signal with a video output setting with which the display device is actually able to perform display.

### [Solution to Problem]

A video display control device according to one embodiment of the present invention is a video display control device that is connected to a display device and that has one or more processors, in which the one or more processors extract one or more candidates for a video output setting with which the display device is able to perform display, and output a video signal based on the video output setting of the candidates to verify whether the display device is able to perform display, for each of the one or more candidates.

A control method for a video display control device according to one embodiment of the present invention is a control method for a video display control device connected to a display device, including extracting one or more candidates for a video output setting with which the display device is able to perform display, and outputting a video signal based on the video output setting of the candidates to verify whether the display device is able to perform display, for each of the one or more candidates.

A program according to one embodiment of the present invention is a program for controlling a video display control device connected to a display device, and for causing the video display control device to execute a process of extracting one or more candidates for a video output setting with which the display device is able to perform display, and outputting a video signal based on the video output setting of the candidates to verify whether the display device is able to perform display, for each of the one or more candidates. The program may be provided by being stored in a computer-readable and non-transitory information storage medium.

### [Brief Description of Drawings]

[FIG. 1]

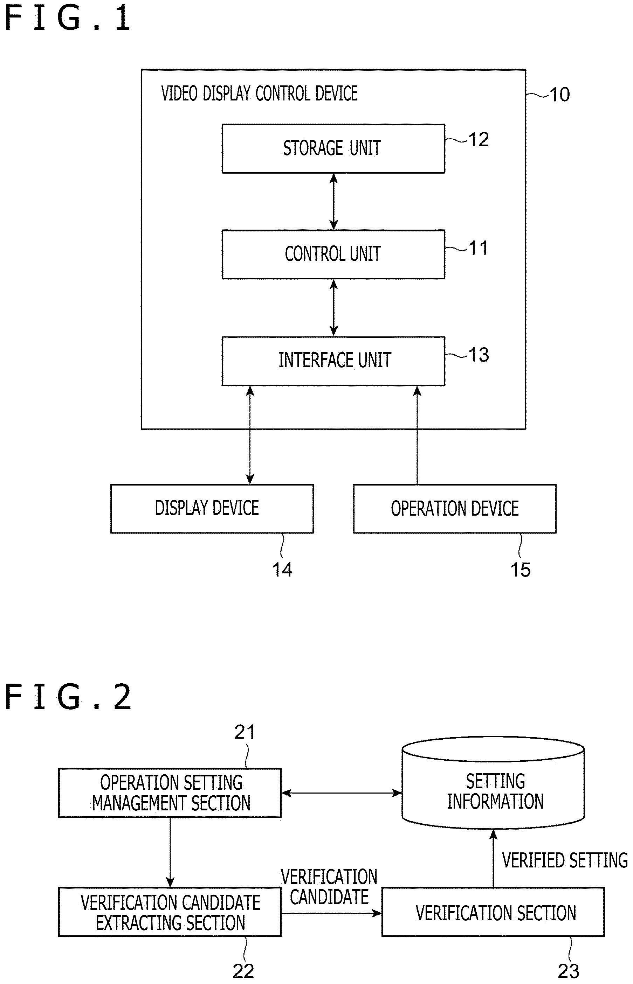

   FIG. 1 is a configuration block diagram illustrating a configuration of a video display control device according to an embodiment of the present invention.
[FIG. 2]
   FIG. 2 is a functional block diagram illustrating functions of the video display control device according to the embodiment of the present invention.
[FIG. 3]

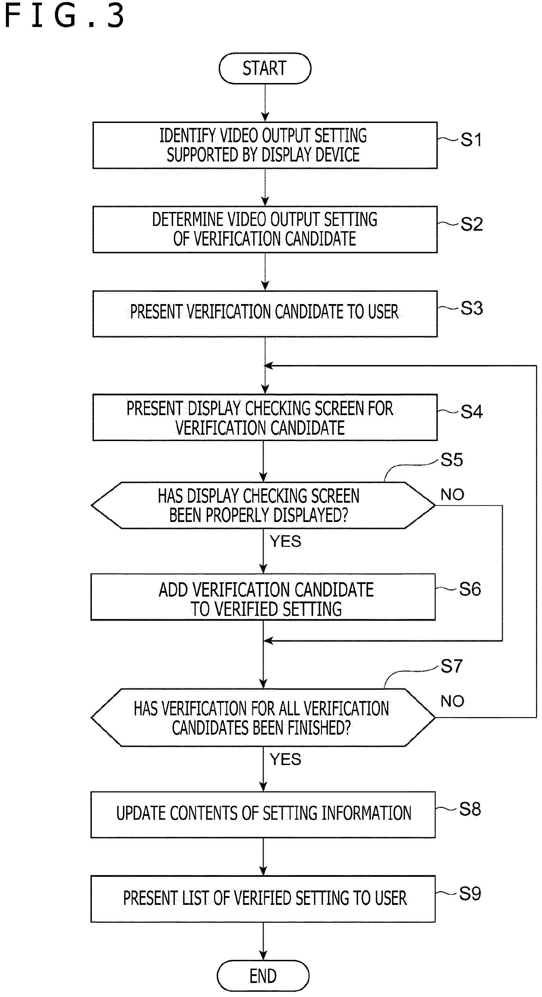

   FIG. 3 is a flow diagram illustrating an example of a flow of a video output setting verification process.
[FIG. 4]

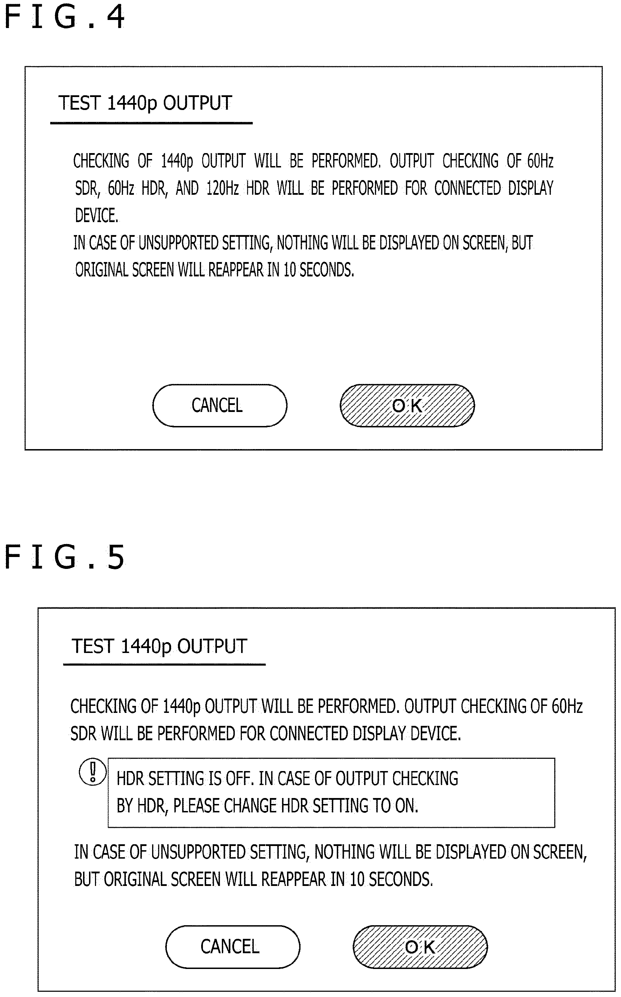

   FIG. 4 is a diagram illustrating an example of a screen presenting verification candidates.
[FIG. 5]
   FIG. 5 is a diagram illustrating another example of the screen presenting a verification candidate.
[FIG. 6]

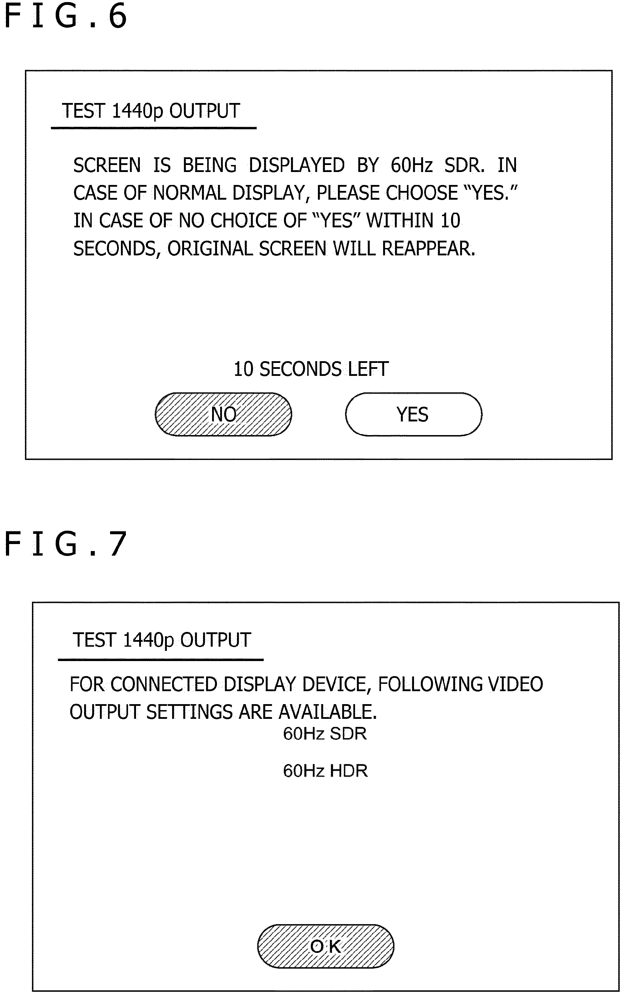

   FIG. 6 is a diagram illustrating an example of a display checking screen for a video output setting.
[FIG. 7]
   FIG. 7 is a diagram illustrating an example of a screen presenting verified settings.
[FIG. 8]

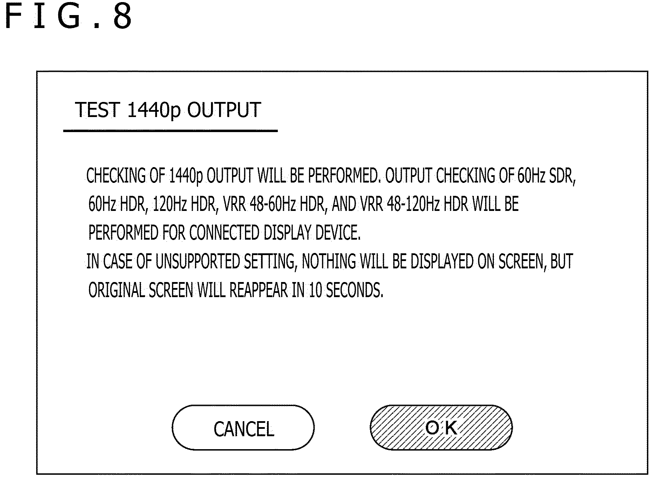

   FIG. 8 is a diagram illustrating an example of a screen presenting verification candidates in the case of being compatible with the variable refresh rate (VRR) method.

### [Description of Embodiment]

Hereinafter, an embodiment of the present invention will be described in detail with reference to the drawings.

FIG. 1 is a configuration block diagram illustrating the configuration of a video display control device 10 according to an embodiment of the present invention. The video display control device 10 includes a home video game console, a portable game machine, a personal computer, etc., for example, and is configured to have a control unit 11, a storage unit 12, and an interface unit 13, as illustrated in the figure. Further, the video display control device 10 is connected to a display device 14 and an operation device 15.

The control unit 11 includes at least one processor such as a central processing unit (CPU), and carries out various kinds of information processing by executing programs stored in the storage unit 12. Incidentally, specific examples of processing executed by the control unit 11 in the present embodiment will be described later. The storage unit 12 includes at least one memory device such as a random access memory (RAM), and stores the programs to be executed by the control unit 11 and data to be processed by the programs.

The interface unit 13 is an interface for data communication with the display device 14 and the operation device 15. The video display control device 10 is connected to each of the display device 14 and the operation device 15 via the interface unit 13 either by wire or wirelessly. Specifically, the interface unit 13 includes a multimedia interface for transmitting to the display device 14 a video signal supplied by the video display control device 10. In addition, the interface unit 13 also includes a data communication interface for receiving a signal indicating the contents of an operation performed by a user on the operation device 15.

The display device 14 is a liquid crystal display, an organic electroluminescence (EL) display, or the like, and receives a video signal output by the video display control device 10 and displays the video corresponding to the received video signal on a screen.

The operation device 15 is a controller for a home video game console, for example, and receives operation input from a user. The operation device 15 is connected to the video display control device 10 by wire or wirelessly, and transmits an operation signal indicating the contents of the operation input received from the user to the video display control device 10.

Functions achieved by the video display control device 10 will be described below with reference to the functional block diagram of FIG. 2. As illustrated in FIG. 2, the video display control device 10 is functionally configured to have an operation setting management section 21, a verification candidate extracting section 22, and a verification section 23. These functions are achieved by the control unit 11 operating in accordance with one or a plurality of programs stored in the storage unit 12. These programs may be provided to the video display control device 10 via a communication network such as the Internet, or may be provided by being stored in a computer-readable information storage medium such as an optical disk.

The operation setting management section 21 holds various kinds of setting information related to the operation of the video display control device 10 in the storage unit 12, and updates the contents in response to user's instructions, etc. To be specific, in the case where the user gives an instruction for starting changing the operation settings, for example, the operation setting management section 21 displays an operation setting change acceptance screen on the display device 14. In this state, the operation setting management section 21 updates the contents of the setting information held by the video display control device 10, by accepting a selection operation from the user.

Particularly in the present embodiment, the setting information held by the operation setting management section 21 is assumed to include the contents of settings related to the specifications, format, and standards of the video signal (hereinafter referred to as video output settings) to be output by the video display control device 10 to the display device 14. The video output settings may include such setting items as the resolution (here, this refers to the number of pixels of each frame image constituting the video), the scanning method (interlace method or progressive method), the frame rate (the number of update times of frames per second), and the dynamic range (the range of brightness and darkness of the displayed color: standard dynamic range, high dynamic range, etc.) of the video to be displayed on the screen of the display device 14, or any combination of these setting items.

The operation setting management section 21 presents the user with a plurality of selectable options for each setting item included in the video output settings, and records the contents of the video output setting selected by the user from the presented options, as part of the setting information. The video display control device 10 generates a video signal according to the video output setting recorded by the operation setting management section 21, and outputs the signal to the display device 14. Note that the operation setting management section 21 records different contents of video output settings as setting information for each type of display device 14 to be connected. This allows the user to use different types of video output settings depending on the type of display device 14 to be connected to the video display control device 10. Note that the type of display device 14 can be identified by reference to information provided by the display device 14.

This video output setting cannot be changed by the user to any content, and needs to be a setting supported by the connected display device 14 (i.e., compatible with the display device 14). If a resolution or a frame rate that is not supported by the display device 14 is selected, there is a possibility that the display device 14 will not be able to properly display the video of the video signal output by the video display control device 10. Hence, it is desirable for the operation setting management section 21 to obtain in advance the details of the video output setting supported by the display device 14, and to allow the user to change the setting within that range.

However, even for a video output setting that the display device 14 supports, there are cases where the display device 14 may not be able to actually display the video of a video signal according to the specifications in some cases. In particular, it has been found that, for a resolution setting called 1440p (a setting in which the number of pixels in the vertical direction is 1440 and the scanning method is a progressive method), there are cases where the display device 14 may not be able to properly display the video of the video signal output by the video display control device 10, depending on the details of the video output setting, even in the case where the display device 14 supports the resolution setting. Hence, the video display control device 10 according to the present embodiment is designed to verify in advance the details of the video output setting with which the display device 14 can actually perform display in the case where the user desires video output at this resolution setting.

To be specific, the verification candidate extracting section 22 and the verification section 23 to be described later execute a verification process to identify video output settings with which the display device 14 is able to perform display. Hereinafter, a video output setting that has been verified by the verification section 23 as one with which the display device 14 is able to perform display is referred to as a verified setting. The operation setting management section 21 presents setting items that match the verified settings as options to the user, and restricts selection of setting items such that the setting items that do not match the verified settings will not be selected, thereby preventing the user from selecting a video output setting with which the display device 14 is in practice unable to perform display.

The operation setting management section 21 restricts a predetermined setting content (here, the resolution setting of "1440p") from being selected as an option for the video output setting until the verification process is completed. Specifically, in the case where the verification process is not completed, the operation setting management section 21 may avoid displaying "1440p" originally as an option for the resolution on the operation setting change screen, or may display the option of "1440p" in a form different from those of the selectable items (for example, in a grayed-out state) to indicate that it is not selectable. Alternatively, the operation setting management section 21 may display "1440p" as one of the options, and may present the user with a message that the verification process needs to be performed in advance in the case where the user selects that option. Also, in the case where the user selects that option, the verification process for the video output setting may be started automatically.

In order to make such control possible, the operation setting management section 21 holds verified flag information indicating whether or not the verification process of the video output settings has been performed for the display device 14 in association with identification information (such as the model name and model number of the display device 14) that specifies the type of the display device 14. The operation setting management section 21 identifies the type of the display device 14 connected at the time when the video display control device 10 is activated or when a new display device 14 is connected, or the like. This identification can be achieved by reference to information provided by the display device 14, as described above. After identifying the type of the display device 14, the operation setting management section 21 determines whether or not the verification process has been performed for the display device 14 by referring to the verified flag information that is held in association with the currently connected display device 14, and restricts the user from selecting the resolution setting of "1440p" in the case where the verification process has not been performed. Conversely, in the case where the verification process has been performed, "1440p" is made selectable as a resolution option. Note that, in the case where an unknown display device 14 is newly connected, the operation setting management section 21 first sets the verified flag information for the display device 14 to a value indicating that the verification process has not been performed, and holds the value anew.

The verification candidate extracting section 22 extracts candidates for video output settings with which the display device 14 may actually be able to perform display. The video output settings extracted by the verification candidate extracting section 22 are subject to a verification process by the verification section 23 to be described later. Hereinafter, the candidates for the video output settings extracted by the verification candidate extracting section 22 are referred to as verification candidates.

To be specific, the verification candidate extracting section 22 acquires support information provided by the connected display device 14 and extracts candidates for video output settings according to the contents thereof. This support information is information indicating the video output settings supported by the display device 14. As the support information, Extended Display Identification Data (EDID) and the like are known. By extracting the video output settings determined to be supported, in reference to the support information as verification candidates, the video output settings which are not supported by the display device 14, that is, with which the display device 14 cannot perform display, can be excluded from the verification candidates in advance. Since the support information is information provided by the display device 14 itself, the video output settings are highly likely to be those with which the display device 14 can perform display. However, as described above, there are cases where the display device 14 cannot actually perform display due to minor deviations in specifications, etc.

Further, the verification candidate extracting section 22 may narrow down the verification candidates according to the contents of the current video output settings included in the setting information held by the operation setting management section 21 (i.e., the contents of the video output settings already set by the user). For example, in the case where the user has made a setting to use a standard dynamic range (SDR) as the setting of the dynamic range, the verification candidate extracting section 22 may selectively extract video output settings with the standard dynamic range as verification candidates, and exclude video output settings with the high dynamic range (HDR) from the verification candidates. Also, in the case where the user selects a setting to use a high frame rate as the setting of the frame rate setting, the verification candidate extracting section 22 may selectively extract the video output settings with a frame rate equal to or higher than a predetermined value as verification candidates, and exclude video output settings with the low frame rate from the verification candidates.

In addition, in the case where a video output setting that is not to be used among the video output settings managed by the operation setting management section 21 is supported by the display device 14, the verification candidate extracting section 22 may present the user with a message prompting the user to change the setting in order to cause such a video output setting to be included in the verification candidates. For example, in the case where a setting is made by the user not to use a high dynamic range, if the display device 14 supports a video output setting with a high dynamic range, the verification candidate extracting section 22 excludes the video output setting with a high dynamic range from the verification candidates, and presents the user with a message that the video output setting with a high dynamic range can be included in the verification candidates by changing the setting information. This makes it possible to avoid a situation in which a video output setting supported by the display device 14 is excluded from the verification candidates against the user's intention.

Further, the verification candidate extracting section 22 may present the user with candidates for video output settings extracted in reference to support information of the display device 14, etc., and accept from the user a selection of video output settings to be adopted as verification candidates. For example, the verification candidate extracting section 22 presents the user with a list of video output settings supported by the display device 14, and in the case where the user issues an instruction to exclude some video output settings from the list, the verification candidate extracting section 22 excludes the video output settings targeted by the instruction from the verification candidates. This allows the user to verify only the video output settings that the user wants to use.

The verification section 23 verifies whether the display device 14 can actually display the video of the video signal of the video output setting for each of the verification candidates of the video output setting extracted by the verification candidate extracting section 22. Specifically, the verification section 23 actually outputs a video signal for verification based on the video output setting for each of the verification candidates. Then, the verification section 23 accepts a result input from the user regarding whether or not the video for verification is properly displayed on the display device 14. In the case where the user responds that the video is properly displayed, it can be determined that the video output setting of the verification candidate is usable. On the other hand, in the case where the user responds that the video is not properly displayed, or in the case where the user does not input any response within a predetermined period of time, it is determined that the display device 14 cannot perform proper display with that video output setting and the video output setting is not usable. This makes it possible to determine whether the display device 14 can actually perform display with that video output setting for all of the plurality of verification candidates.

When finishing the verification of all the verification candidates, the verification section 23 records the video output settings that have been determined to be capable of proper display (available) as verified settings. As described above, the operation setting management section 21 presents the recorded verified settings as options of video output settings that the user can select.

Hereinbelow, an example of the flow of the video output setting verification process will be described below with reference to the flow diagram in FIG. 3. Here, it is assumed that the video output setting verification process is executed in the case where the user uses the video output setting of "1440p." This flow starts in the case where the user selects the menu item "Test 1440p output" while the operation setting management section 21 is displaying the operation setting change screen.

First, the verification candidate extracting section 22 acquires support information from the display device 14 and identifies video output settings supported by the display device 14 in a resolution and scanning method of 1440p (S1). Further, the verification candidate extracting section 22 refers to the setting information held by the operation setting management section 21, to narrow down the video output settings identified in S1, and determine the video output settings of the verification candidates (S2).

Thereafter, the verification section 23 presents the user with the verification candidates extracted by the verification candidate extracting section 22 in S1 and S2 (S3). FIG. 4 illustrates an example of a presentation screen on which the verification candidates are presented to the user. Here, as a specific example, it is assumed that three video output settings "60Hz SDR," "60Hz HDR," and "120Hz HDR" are extracted as verification candidates. Note that, in this example, combinations of setting items of the frame rate and the dynamic range are extracted as verification candidates, and 60Hz and 120Hz indicate frame rate values, respectively. Also, SDR represents a standard dynamic range, and HDR represents a high dynamic range.

FIG. 5 illustrates another example of a verification candidate presentation screen. In this example of the figure, a setting that does not use a high dynamic range has been set in advance, and hence, a high dynamic range video output setting is excluded from the verification candidates. Meanwhile, the verification candidate presentation screen has a message indicating that the setting needs to be changed to a setting that uses a high dynamic range in order to allow the video output setting of the high dynamic range to be included in the verification candidates.

Thereafter, when the user performs an operation to instruct continuance of the verification, the verification section 23 performs verification as to whether the display device 14 can actually perform display with each of the verification candidates presented in S3. To be specific, the verification section 23 actually outputs a video signal based on the video output setting to be verified, and presents the user with a display checking screen for checking whether the display based on the manufacturing output setting is proper (S4). In a state in which this display checking screen is presented to the user, the verification section 23 determines whether the display checking screen is properly displayed according to the operation contents accepted from the user (i.e., whether the video output setting of the verification candidate to be verified is usable) (S5).

FIG. 6 illustrates an example of a display checking screen for video output settings. This display checking screen includes a check button (a "Yes" button in the figure) to be operated in the case where the screen is displayed properly. In the case where the screen is displayed properly, the user operates the check button to notify the video display control device 10 that the verification has been successful. In this case, the verification section 23 adds the verification candidate currently being verified to the verified settings (S6).

Conversely, in the case where there is an abnormality in the display of the checking screen, the user may operate a button to respond to that effect (the "No" button in the figure). In this case, the verification section 23 determines that the verification has failed, and does not add the verification candidate currently being verified into the verified settings. However, in the case of a video output setting with which the display device 14 is unable to perform display, there is a possibility that the user cannot visually see the checking screen itself in some cases such as the cases where nothing is displayed on the screen. Therefore, in the case where a predetermined period of time has passed with the user not operating any button while the checking screen is displayed, the verification section 23 determines that the verification has failed, just as in the case where the "No" button has been operated, and does not add the verification candidate currently being verified into the verified settings.

The verification section 23 repeats the processes from S4 to S6 for each verification candidate until verification is completed for all of the verification candidates presented to the user in S3 (S7). When verification is completed for all of the verification candidates, the verification section 23 updates the contents of the setting information held by the operation setting management section 21 (S8). Specifically, the verification section 23 records flag information indicating that verification processing for the "1440p" setting has been performed for the display device 14 in association with information identifying the currently connected display device 14. In addition, the verification section 23 records the video output setting that has been successfully verified and added to the verified settings, as a displayable video output setting in association with information identifying the currently connected display device 14.

Further, the verification section 23 presents a list of the recorded verified settings to the user (S9). FIG. 7 illustrates an example of a screen presenting verified settings. Here, it is illustrated that two verification candidates "60Hz SDR" and "60Hz HDR" have been successfully verified among the three types of verification candidates presented to the user in S3.

By executing the setting information update process of S8, the operation setting management section 21 becomes capable of accepting the selection of the video output setting from the user according to the contents of the updated setting information after the execution of this verification process. Specifically, the operation setting management section 21 presents the "1440p" which has been subjected to the verification process to the user as one of the options for the resolution setting. In addition, the operation setting management section 21 presents the verified settings "60Hz SDR" and "60Hz HDR" to the user as options for the frame rate and the dynamic range. Meanwhile, the operation setting management section 21 provides control such that the video output setting of "120Hz HDR," which has been determined as being unable to provide proper display as a result of the verification, is not presented to the user as an option or is presented in an unselectable state. This restricts the user's selection of video output settings that have not been verified, and prevents the user from erroneously selecting a video output setting with which the display device 14 is unable to perform display.

Note that, instead of presenting the user with combinations of the setting items of the frame rate and the dynamic range as options, the operation setting management section 21 may allow the user to select each setting item individually. In this case, the operation setting management section 21 determines whether the combination selected by the user agrees with the video output settings with which the display device 14 is able to perform display (verified settings), and notifies the user that the combination is not selectable in the case where the combination does not agree with the video output setting. Alternatively, the operation setting management section 21 may limit the options that the user can select for one setting item depending on the selection of the other setting item, such that only combinations of setting items that agree with the verified settings can be selected.

As described above, according to the video display control device 10 of the present embodiment, by performing a verification process in advance for a specific video output setting before the user selects that setting, the user can select a video output setting with which the display device 14 can reliably perform display. Furthermore, when performing the verification process, by extracting video output settings that will be verification candidates in reference to support information of the display device 14, the settings made by the user, and the like, unnecessary verification processes can be avoided to reduce efforts required for the verification process.

It should be noted that the embodiment of the present invention is not limited to the above. For example, in the above description, the video display control device 10 executes a verification process to enable the user to select a resolution setting of "1440p." However, the present invention is not limited to this, and a preliminary verification process may be executed to enable the user to select other video output settings.

Further, in the above description, the video output settings to be verified are assumed to be combinations of the frame rate and the dynamic range. However, the present invention is not limited to this, and the verification process may be performed by use of other setting items or combinations of various setting items as the video output settings to be verified.

Further, the screen contents presented to the user in the above description are merely examples, and the video display control device 10 may display screens with various contents.

The video output settings to be verified may include settings that use the VRR method. Here, an example of control in the case where the video display control device 10 executes a verification process for a video output setting that uses the VRR method will be described.

Generally, in the case where the display device 14 is compatible with the VRR method, a range of refresh rates supported by the display device 14 is determined. The video display control device 10, which outputs a video signal of the VRR method, determines the range of refresh rates that will actually be used (hereinafter, referred to as the usage rate range) within the range of refresh rates supported by the display device 14. Further, the video display control device 10 draws and outputs frame images while changing the refresh rate within the determined usage rate range according to the situation.

In this case, even if the refresh rate is within the range supported by the display device 14, there are cases where minor display abnormalities such as changes in screen brightness or tearing may occur depending on the type of display device 14 or the used refresh rate. Hence, in the case of outputting a video by use of the VRR method, it is desirable for the video display control device 10 to verify in advance not only whether or not the display device 14 supports the VRR method, but also whether the display device 14 can display a video properly within the range of the usage rate to be used in practice.

However, although the video display control device 10 may be capable of adopting various refresh rate ranges as the usage rate range owing to its specifications, it would be time-consuming to verify in advance for all of them whether the display device 14 is capable of display. Hence, for example, the verification candidate extracting section 22 extracts a verification candidate from one or more predetermined rate range candidates. This rate range candidate may be a typical refresh rate range that the video display control device 10 may actually use as the usage rate range. In the following, as a specific example, it is assumed that the video display control device 10 has prepared in advance two types of rate range candidates "48-60 Hz" and "48-120 Hz" for the video output setting using the VRR method.

In this case, the verification candidate extracting section 22 determines whether or not the display device 14 supports the VRR method by referring to the support information provided by the display device 14. If the display device 14 does not support the VRR method, the verification candidate extracting section 22 excludes all video output settings that use the VRR method from the verification candidates. On the other hand, in the case where the display device 14 supports the VRR method, the verification candidate extracting section 22 further refers to the support information provided by the display device 14, and extracts rate range candidates that are included in the range of refresh rates supported by the display device 14 (i.e., rate range candidates in which all refresh rates within the rate range candidates are supported by the display device 14), as verification candidates. For example, it is assumed that the connected display device 14 supports the VRR method, but the refresh rates to be supported are in the range of 48 to 100 Hz. In this case, the verification candidate extracting section 22 excludes the rate range candidate "48-120 Hz" that includes the refresh rate range not supported by the display device 14 among the two types of rate range candidates prepared in advance from the verification candidates, and extracts only "48-60 Hz" as a verification candidate.

It should be noted that the candidates for the video output settings extracted by the verification candidate extracting section 22 as the verification candidates may be video output settings including combinations of predetermined rate range candidates in the VRR method and other setting items. For example, if a color is specified in a specific color space format in the case where video output is performed in a specific usage rate range, the verification candidate extracting section 22 extracts the combination as a verification candidate. As a specific example, in the case where the video display control device 10 uses the VRR method in a usage rate range of "48-60 Hz," the "RGB" format is used, and in the case where the VRR method is used in a usage rate range of "48-120 Hz," the color is specified in the "YUV422" format due to bandwidth issues. In this case, the verification candidate extracting section 22 extracts these combinations as verification candidates, and the verification section 23 performs verification processing on such combinations of video output settings as verification candidates.

FIG. 8 illustrates a display example in the case where such rate range candidates for the VRR method are included in the verification candidates. Here, in addition to the three verification candidates illustrated in FIG. 4, video output settings using two types of VRR methods, that is, "VRR 48-60Hz HDR" and "VRR 48-120Hz HDR," are extracted as verification candidates.

Even in the case where the verification candidates include a video output setting that uses the VRR method, the verification section 23, as in the embodiment described above, displays a display checking screen for each of the verification candidates extracted by the verification candidate extracting section 22 and verifies whether display is performed properly by the verification candidate. However, in the case of outputting a video in the VRR method, performing verification for all refresh rates included in the usage rate range takes time, and is not preferable. Hence, in the case of performing verification processing by displaying a display checking screen for a rate range candidate prepared in advance, the verification section 23 may selectively use a plurality of verification rates previously determined for the rate range candidate, as the verification target.

Here, the plurality of verification rates preferably include at least the minimum and maximum values of the rate range candidates, and may further include intermediate values. Further, in the case where an intermediate value between the minimum and maximum values is used as the verification rate, the value may be a value typically used at the time of outputting a video. As an example, in the case where the rate range candidate is in a range of 48 to 60 Hz, verification is performed for two refresh rates of 48 Hz and 60 Hz as the verification rates. Further, in the case where the rate range candidate is in a range of 48 to 120 Hz, verification is performed for three refresh rates of 48 Hz, 60 Hz, and 120 Hz as the verification rates. Here, 60 Hz is a refresh rate that is likely to be frequently used by the video display control device 10 in the case of the usage rate range of 48 to 120 Hz.

When displaying the display checking screen to perform the verification process, the verification section 23 outputs the video in the VRR method while switching between a plurality of verification rates in a relatively short cycle. For example, in the case of two verification rates that are 48 Hz and 60 Hz, the verification section 23 continues to display the display checking screen while alternately switching between two output patterns, that is, a video signal output at 48 Hz for 0.5 seconds and a video signal output at 60 Hz for 0.5 seconds. In this case, since one cycle is one second, if the display checking screen continues to be displayed for at least one second, the user can verify that the display is proper at either of the two verification rates.

It is to be noted that, in the display checking screen illustrated in FIG. 6, the "No" button is in a selected state at the start of display. Hence, in order for the user to respond that the display is proper, a two-step operation is required, that is, a selection switching operation is performed such that the "Yes" button is in a selected state, and then an operation is performed to make a determination of the selected button. In this way, by requiring the user to perform two or more steps of operations to respond that the display is proper, the user can be prevented from ending the response before the video has been displayed at all the verification rates (i.e., one switching cycle of the verification rate has been completed) when the switching cycle of the verification rate is sufficiently short, and it is expected that the user will complete the verification after checking the video output at all the verification rates.

In this way, by displaying the display checking screen while switching between a plurality of verification rates and then accepting a response from the user, whether or not the screen is displayed properly at any of the plurality of verification rates can be verified. This method does not verify whether or not the display is normal at refresh rates other than the verification rates. However, by performing verification at a plurality of verification rates including the minimum and maximum values of the usage rate range, it is more likely that the display will be proper at other refresh rates included in the usage rate range.

Further, in the above description, a screen including a message as that illustrated in FIG. 6 is assumed to be displayed as a display checking screen for the video output settings. However, in the case where a video signal based on the VRR method is output, or other cases, there are cases where it may be difficult to determine whether the display is proper unless the video whose contents change over a plurality of frames is checked. To be specific, depending on the contents of the video output settings, in the case where the video display control device 10 outputs a video signal based on the VRR method, even if the display device 14 can display each frame image properly, the video display control device 10 may not be able to refresh the frame images at the update timing it intends, causing the video to be distorted.

Hence, when verifying each verification candidate of the video output setting, the verification section 23 may display the video of a content that changes in a predetermined pattern for a certain period of time on the display device 14 as video for verification. In this case, the video for verification may be a video in which a waveform pattern change is repeated at a certain period, for example. In the case where the display device 14 cannot appropriately support the VRR method, displaying such a video for verification may cause display disturbance such as jerky motion in the change of the waveform pattern or irregular speed of change. In such a case, by the user inputting a response that the video for verification is not displayed properly, the verification section 23 can determine not to add the verification candidate to the verified settings. In this way, since the verification section 23 displays a video for checking a predetermined pattern for each of the verification candidates, whether the display device 14 can support the video output setting can be verified in more detail.

In addition, the verification section 23 may also verify whether or not audio is normally reproduced based on not only the video signal but also the audio signal. In this case, the video output settings to be verified may include not only settings related to the video signal, but also settings related to the specifications, format, and standards of the audio signal to be output to the display device 14 together with the video signal. The verification section 23 outputs an audio signal of a predetermined pattern (e.g., a beep sound or a sine wave audio signal) for each verification candidate of the video output setting including settings related to the audio signal, and reproduces audio based on the audio signal from the speaker of the display device 14. In response to this, the user answers whether the audio is properly reproduced (whether the audio can be heard, etc.). In this way, the verification section 23 can verify not only whether the video is properly displayed but also whether the audio is properly reproduced for each verification candidate.

### [Reference Signs List]

- 10:: Video display control device
- 11:: Control unit
- 12:: Storage unit
- 13:: Interface unit
- 14:: Display device
- 15:: Operation device
- 21:: Operation setting management section
- 22:: Verification candidate extracting section
- 23:: Verification section

## Claims

1. A video display control device that is connected to a display device and has one or more processors, wherein
the one or more processors
extract one or more candidates for a video output setting with which the display device is able to perform display, and
output a video signal based on the video output setting of the candidates to verify whether the display device is able to perform display, for each of the one or more candidates.

2. The video display control device according to claim 1, wherein a plurality of options for the video output setting are presented to a user, and the video signal based on the video output setting selected by the user from among the plurality of options is output to the display device, and
the user is restricted from selecting the video output setting that has not been verified as one with which the display device is able to perform display, in the verification when the plurality of options are presented.

3. The video display control device according to claim 2, wherein
the one or more processors
record flag information indicating whether or not the verification has been performed for the display device, and restrict the user from selecting a predetermined video output setting when determining that the verification has not been performed, by reference to the flag information.

4. The video display control device according to claim 1, wherein the one or more processors extract the candidates for the video output setting, in reference to information provided by the display device.

5. The video display control device according to claim 1, wherein the one or more processors extract the candidates for the video output setting, according to a content of the video output setting set in advance by the user.

6. The video display control device according to claim 1, wherein
the one or more processors
extract, as a candidate for the video output setting with which the display device is able to perform display, a setting for outputting the video signal by using a variable refresh rate method and for changing a refresh rate within a usage rate range included in a range of the refresh rate with which the display device is able to perform display, from among candidates for a predetermined rate range, and
output the video signal based on the candidate while switching in sequence among a plurality of verification rates that have been determined in advance for the candidate, when verifying whether the display device is able to perform display by outputting the video signal based on the candidate, regarding the candidate for the video output setting for outputting the video signal by use of the variable refresh rate method.

7. The video display control device according to claim 6, wherein the plurality of verification rates determined for the candidate for the video output setting include at least a maximum refresh rate and a minimum refresh rate of the usage rate range corresponding to the candidate.

8. A method for controlling a video display control device connected to a display device, comprising:
extracting one or more candidates for a video output setting with which the display device is able to perform display; and
outputting a video signal based on the video output setting of the candidates to verify whether the display device is able to perform display, for each of the one or more candidates.

9. A program for causing a video display control device connected to a display device to execute:
extracting one or more candidates for a video output setting with which the display device is able to perform display; and
outputting a video signal based on the video output setting of the candidates to verify whether the display device is able to perform display, for each of the one or more candidates.
